# FASCICULE DE BREVET EUROPEEN

(11) **EP 1 771 391 B1**
(45) Date de publication et mention de la délivrance du brevet: **29.02.2012**
(21) Numéro de dépôt: 05795019.8
(22) Date de dépôt: 27.07.2005
(51) Int. Cl.: C03B 3/02, C03B 5/235, C03C 1/02, C03B 5/12

(54) **PROCEDE ET DISPOSITIF DE TRAITEMENT DE DECHETS FIBREUX EN VUE DE LEUR RECYCLAGE**
VERFAHREN UND VORRICHTUNG ZUR BEHANDLUNG VON FASERABFALLSTOFFEN ZUR WIEDERVERWERTUNG
METHOD AND DEVICE FOR TREATING FIBROUS WASTES FOR RECYCLING

(30) Priorité: 29.07.2004 FR 0451717
(43) Date de publication de la demande: 11.04.2007
(73) Titulaire: SAINT-GOBAIN ISOVER, 92400 Courbevoie (FR)
(72) Inventeur: JACQUES, Rémi, F-60190 ESTREES SAINT-DENIS (FR); PALMIERI, BIAGIO, F-60200 COMPIEGNE (FR); MAUGENDRE, Stéphane, F-60460 PRECY S:OISE (FR); JOUBAUD, Laurent, F-75011 PARIS (FR)
(74) Mandataire: Teyssedre, Laurent
(86) Numéro de dépôt international: PCT/FR2005/050622
(87) Numéro de publication internationale: WO 2006/018582

(56) Documents cités:
- EP-A- 0 389 314
- EP-A- 0 590 479
- EP-A- 0 692 678
- WO-A1-03/045859
- FR-A1- 2 746 037
- US-A- 3 175 814
- US-A- 4 877 449

## Description

La présente invention se rapporte à un procédé et un dispositif pour le traitement de déchets, notamment issus de la production de fibres minérales, en vue de former une matière minérale apte à être utilisée comme matière première vitrifiable dans un procédé de fusion du verre.

Elle concerne plus particulièrement un procédé de traitement de déchets provenant de la production de fibres minérales, notamment du type fibres de laine de verre ou de roche associées à des liants organiques et éventuellement de l'eau ou d'autres matières métalliques et/ou organiques.

Les différentes étapes de la production de laine minérale génèrent une certaine quantité de déchets. Ces déchets peuvent provenir par exemple de la découpe des produits, et contiennent alors des quantités importantes de matières organiques telles que des résines appelées « liants » et destinées à assurer la cohésion mécanique des matelas fibreux, et éventuellement des quantités importantes d'eau. D'autres types de matières peuvent être associées aux fibres minérales, par exemple des films papier, à base d'aluminium ou bitumineux, des éléments de palettes en bois...

La refusion directe de ces déchets dans les fours de production de laine minérale s'est révélée impossible en pratique car elle génère de nombreux inconvénients. Tout d'abord, la structure fibreuse des matelas de laine minérale rend ces produits extrêmement isolants thermiquement, ce qui est à l'origine de leur usage mais rend aussi leur fusion difficile et très coûteuse en temps et en énergie. Du fait de leur faible densité, les produits fibreux ont de plus tendance à flotter au-dessus du bain de verre, ce qui rend difficile leur incorporation à ce dernier. En outre, la forte quantité d'eau et la forte enthalpie de vaporisation de cette dernière génèrent des coûts énergétiques importants, soit directement dans le four, soit dans une éventuelle étape préalable de séchage en étuve. Enfin, la forte teneur en matières organiques, et donc en agents réducteurs, perturbe le processus de fusion et d'affinage du verre, ce qui impose l'ajout de quantités importantes d'agents oxydants tels que le nitrate de sodium, générant ainsi des émissions d'oxydes d'azote préjudiciables à l'environnement, ou l'oxyde de manganèse, qui risque de colorer le verre de manière inacceptable.

Un procédé et un dispositif destinés au recyclage par fusion de déchets de laines minérales ont été proposés dans la publication de brevet EP-A-0 389 314. Ils consistent à amener dans la masse de déchets fibreux de l'oxygène pur ou de l'air enrichi en oxygène (à hauteur d'au moins 40%) et à provoquer ainsi la combustion des liants organiques, laquelle génère, lorsque la température adiabatique est suffisante, une chaleur suffisamment intense pour fondre la matière minérale. Ce procédé permet ainsi de séparer les matières organiques des matières minérales (ces dernières pouvant alors être utilisées comme matière première dans un four de fusion), en général sans apport extérieur d'énergie, puisque la chaleur n'est apportée que par la combustion des matières organiques. Dans un tel dispositif, des moyens d'alimentation en oxygène sont disposés sur la sole, sous le talus de déchets.

Lors de l'exploitation industrielle d'un tel procédé, appelé procédé « Oxymelt », et afin d'accroître la tirée spécifique de tels fours (la tirée spécifique est définie comme la tirée du four, exprimée en tonnes de déchets traités par jour, rapportée à la surface de fusion en m²), il s'est révélé nécessaire d'apporter une part d'énergie par l'intermédiaire de brûleurs aériens situés au-dessus du tas de déchets. Ces brûleurs présentent toutefois l'inconvénient d'augmenter localement la température des parois et de la voûte du four et donc l'usure des réfractaires formant ces parois et cette voûte. En outre, le verre formé est réduit (se caractérise par un « rédox » élevé, proche de 1), ce qui oblige à l'emploi d'agents oxydants lors de son utilisation ultérieure comme calcin (en général dans des teneurs allant de 5 à 20% du mélange vitrifiable). On définit ici par « rédox » la teneur molaire en fer ferreux du verre rapportée à sa teneur molaire en fer total. Ce terme traduit l'état d'oxydoréduction du verre, qui influe grandement sur les propriétés physico-chimiques du verre.

La présente invention se propose donc d'améliorer ce procédé, donc d'augmenter sa tirée spécifique sans augmenter la température des parois et de la voûte, et de diminuer le rédox du verre formé.

L'invention a tout d'abord pour objet un procédé de traitement de déchets selon la revendication 1.

Les déchets sont du type fibres de laine de verre ou de roche associées à des liants organiques et éventuellement de l'eau ou d'autres matières métalliques et/ou organiques.

Au sens de l'invention, on comprend par « brûleurs immergés », des brûleurs configurés de manière à ce que les flammes qu'ils génèrent et les gaz de combustion produits se développent au sein même de la masse des matières en cours de transformation Généralement, ils se trouvent disposés de façon à affleurer ou à dépasser légèrement des parois latérales ou de la sole du réacteur utilisé, et sont dirigés vers la masse de matières à transformer. Dans le cadre de la présente invention, on fait ainsi déboucher les gaz de combustion d'au moins un brûleur immergé dans la masse de déchets, directement (les gaz de combustion sont alors émis au sein même de la masse de déchets) et/ou indirectement (les gaz de combustion ne sont pas émis directement dans la masse de déchets mais se développent ultérieurement au sein de ladite masse). Par « brûleur » on entend également un dispositif apportant au moins un comburant et au moins un combustible gazeux dans lequel, ou directement à l'issue duquel, ces réactifs sont mélangés de manière à créer une réaction exothermique de combustion. On exclut ainsi les dispositifs parfois qualifiés de brûleurs alors qu'ils n'apportent que l'un ou l'autre des réactifs (combustible ou comburant).

Par « moyens d'alimentation en oxygène ou en air enrichi en oxygène » on entend des dispositifs, tels que des injecteurs, des buses ou plus simplement des orifices, débouchant dans la masse de déchets et servant exclusivement à alimenter de manière directe ladite masse de déchets par de l'oxygène pur ou par de l'air enrichi en oxygène. L'oxygène débouchant directement dans la masse de déchets, l'apport d'oxygène ou d'air enrichi en oxygène se fait ainsi directement au sein même de cette masse de déchets, ce qui permet une distribution très homogène du gaz oxydant. Ces moyens d'alimentation sont donc distincts des brûleurs immergés, la présente invention mettant en oeuvre la combinaison des deux moyens que sont les moyens d'alimentation en oxygène ou en air enrichi en oxygène d'une part, et le ou chaque brûleur immergé d'autre part. Ces moyens d'alimentation sont disposés sur le support de la masse de déchets à traiter, ledit support étant de préférence sensiblement horizontal.

Le principe de fonctionnement d'un four à brûleurs immergés pour la fusion du verre est déjà connu, et a été notamment décrit dans les documents WO 99/35099 et WO 99/37591 : il consiste à pratiquer la combustion directement dans la masse des matières vitrifiables à fondre, en injectant le combustible (en général du gaz du type gaz naturel) et le comburant (en général de l'air ou de l'oxygène) via des brûleurs disposés sous le niveau de la masse en fusion, donc au sein d'un bain de verre liquide. Ce type de combustion immergée provoque par convection un brassage intensif de matières en cours de fusion, ce qui permet un processus de fusion rapide.

L'utilisation d'un four à brûleurs immergés pour l'inertage de déchets est connue de la demande de brevet WO 02/48612, mais le recyclage de matériaux fibreux par un tel procédé n'y est pas envisagé. La combustion immergée suppose en effet la présence d'un bain de verre dans lequel la flamme peut se développer. L'homme du métier est donc incité à penser que l'apport d'un brûleur au sein même d'un amoncellement de matière fibreuse va surtout générer de forts envols et projections de fibres et des pertes d'énergie considérables.

Les inventeurs ont toutefois pu mettre en évidence que la combinaison d'au moins un brûleur immergé avec les moyens d'alimentation en oxygène du dispositif de type « Oxymelt » ne généraient pas d'envols importants et permettaient en outre d'augmenter très significativement la tirée spécifique du dispositif, sans pertes thermiques majeures et en diminuant la quantité d'oxygène nécessaire à la fusion.

Un deuxième avantage particulièrement surprenant du procédé selon l'invention a été observé par les inventeurs. Il s'est révélé qu'un apport d'énergie par le biais d'au moins un brûleur immergé, au lieu d'augmenter, comme on pourrait s'y attendre, les températures du four, diminue au contraire ces mêmes températures, ce qui contribue à augmenter significativement la durée de vie du four. La plus faible température du four présente en effet comme avantage que les infiltrations de verre dans les interstices des réfractaires du four sont moins importantes, la masse fondue infiltrée se solidifiant plus vite du fait de la plus faible température et bouchant l'interstice à un niveau plus proche de l'intérieur du four. On peut considérer que cet effet est un corollaire de l'effet d'augmentation de la tirée spécifique : le talus de matières fibreuses se transformant plus rapidement en matière fondue, cette dernière évacue alors l'énergie de manière plus rapide. Dans le cadre du procédé selon l'invention, la température de fusion (mesurée au niveau de la voûte du four) est avantageusement inférieure à 1200°C, voire inférieure ou égale à 1150°C.

De l'obtention de températures aussi faibles peut résulter la possibilité de construire le four en matériaux réfractaires moins performants et donc sensiblement moins coûteux.

En outre, cette diminution de température a également un effet bénéfique direct de diminution du rédox du verre formé. Il est en effet connu que les hautes températures augmentent dans le verre la stabilité des espèces réduites. Le procédé selon l'invention, par sa mise en oeuvre à des températures plus faibles, permet donc d'atteindre le but souhaité d'oxydation du verre.

Grâce à l'utilisation d'au moins un brûleur immergé, il n'est en outre plus nécessaire d'utiliser les brûleurs aériens situés au-dessus du tas de déchets fibreux. Le procédé selon l'invention ne met ainsi généralement pas en oeuvre de tels brûleurs aériens.

Les brûleurs sont agencés dans une zone sensiblement à l'aplomb du sommet du talus de déchets fibreux. Ils sont répartis de manière symétrique par rapport à un axe vertical rencontrant le sommet du talus de matières fibreuses. Ils sont au nombre d'au moins trois, et sont choisis en nombre impair et afin de répartir la puissance des gaz de combustion en plusieurs points du talus. On contrôle ainsi avantageusement le ou les brûleurs immergés de façon à conserver la masse de déchets sous forme de talus stable au-dessus des brûleurs. La présence d'un seul brûleur à l'aplomb du sommet du talus de matières fibreuses risque par exemple d'avoir pour conséquence la déstabilisation dudit talus, le brûleur pouvant alors se retrouver à découvert, d'où un mauvais transfert de chaleur aux déchets fibreux et un possible échauffement de la voûte et/ou des parois du four.

La géométrie du brûleur peut être celle décrite dans le document de brevet EP-A-0 966 406 ou une géométrie équivalente. Le brûleur peut ainsi être composé d'un système de refroidissement du type boite à eau et d'un conduit central alimenté en gaz combustible du type gaz naturel (ou autre gaz combustible ou fioul) autour duquel est ou sont disposé(s) concentriquement un ou plusieurs conduits alimentés en comburant (par exemple de l'oxygène), tous ces conduits de section cylindrique venant déboucher dans le nez du brûleur.

Les déchets introduits sont en général constitués de fibres de verre dont la composition peut être du type décrit dans le document EP 412 878. Leur teneur en matières organiques liantes (résines) est généralement de l'ordre de 5 à 10%, exprimée en poids sec par rapport au poids total des fibres. Ils peuvent contenir une teneur variable en autres matières (films d'apprêt, matériaux d'emballage...).

L'invention a également pour objet un dispositif selon la revendication 4.

Selon l'invention, le support des déchets est la sole du four.

La présente invention sera mieux comprise à la lecture de la description détaillée ci-après d'exemples de réalisation non limitatifs illustrés par les figures ci-jointes :
- Les figures 1a et 1b illustrent des coupes selon des plans respectivement vertical et horizontal d'un dispositif de mise en oeuvre du procédé « Oxymelt » tel que décrit par le document de brevet EP-A-0 389 314.
- Les figures 2a et 2b illustrent des coupes selon des plans respectivement vertical et horizontal d'un mode de réalisation du dispositif de mise en oeuvre du procédé selon l'invention.

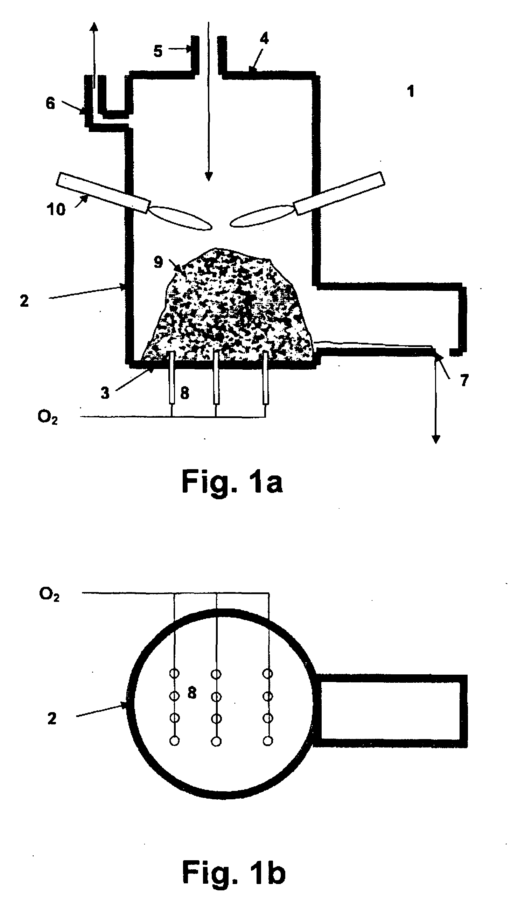

Les figures 1a et 1b présentent le dispositif connu de EP-A-0 389 314. Le dispositif 1 comprend une cuve cylindrique construite en matériaux réfractaires constitués de parois 2, d'une sole 3 et d'une voûte 4. Le dispositif 1 comprend également une zone d'enfournement 5, une cheminée 6 permettant l'extraction des fumées vers un dispositif de dépollution non représenté, une sortie 7 du four comprenant un canal dans la partie inférieure duquel est disposé un orifice de coulée des matières fondues, des injecteurs 8 d'oxygène pur (ou d'air enrichi en oxygène) disposés sur la sole 3 du four (ladite sole servant de support horizontal du talus de déchets fibreux) et deux brûleurs aériens 10.

Ce dispositif sert à la mise en oeuvre d'un procédé continu défini par les étapes suivantes :
- les déchets sont introduits par la zone d'enfournement 5 à l'aide d'une vis sans fin d'un diamètre de 50cm sous forme de matières grossièrement broyées comprenant des fibres de laines de verre mélangées à des produits organiques ou inorganiques tels que des résines synthétiques à base de phénol et de formol faisant office de liant, des films papier ou aluminium etc... et forment un talus 9 sur la sole 3 du four,
- les injecteurs d'oxygène 8 apportent le comburant destiné à réagir de manière exothermique avec le combustible formé par la partie organique des déchets. Dans le cas où la température adiabatique est supérieure à 1200°C, la chaleur dégagée par la réaction est suffisante pour fondre les matières fibreuses. Les brûleurs aériens 10 sont également en fonctionnement afin d'augmenter la tirée du dispositif grâce à un apport d'énergie supplémentaire,
- la masse fibreuse donne ainsi naissance à une masse fondue qui ruisselle sous la forme d'un film mince ayant une viscosité de 100 à 1000 poises jusqu'à la sortie 7 du four pour s'écouler dans l'orifice d'écoulement pratiqué à la base de ladite sortie 7,
- simultanément, les gaz et fumées de combustion sont évacués par la cheminée 6.

Un tel dispositif industriel présente une surface de 3m² pouvant traiter quotidiennement 18 tonnes de déchets issus de la production de laine de verre, ce grâce à un apport d'oxygène de 250Nm³ par heure, et un apport énergétique d'une puissance de 200kW par le biais des deux brûleurs aériens 10. La température du four (mesurée en voûte) lors d'un fonctionnement normal est de 1230 °C.

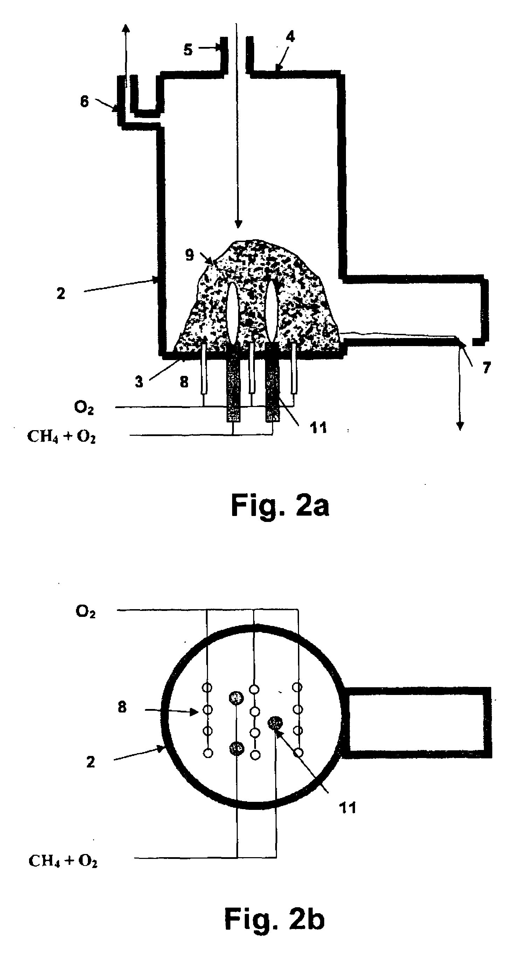

Les figures 2a et 2b représentent un mode de réalisation du dispositif selon l'invention. Les brûleurs aériens 10 ne sont ici plus présents. Trois brûleurs immergés 11 sont en revanche disposés sur la sole 3 du four. Ces trois brûleurs 11 sont sensiblement disposés de manière symétrique par rapport à un axe vertical rencontrant le sommet du talus de matières fibreuses 9. Ils sont alimentés en méthane et en oxygène, dans un rapport stoechiométrique, et les gaz de combustion (c'est-à-dire les produits de la réaction de combustion) sont émis et se développent au sein de la masse de déchets.

Le dispositif selon l'invention permet de mettre en oeuvre un procédé se différenciant du procédé connu du document EP-A-0 389 314, et décrit ci-dessus, par l'absence d'apport énergétique par le biais des brûleurs aériens 10 et par l'étape selon laquelle les brûleurs immergés permettent d'augmenter la tirée spécifique tout en diminuant les températures de fonctionnement.

Dans le cadre de la présente invention, l'ajout des trois brûleurs immergés 11 disposés sur la sole 3 du four, permet de porter la quantité de déchets traités à 24 tonnes par jour, soit une augmentation d'environ 33%, pour une puissance de 240kW. Les brûleurs aériens n'étant plus utilisés, la consommation énergétique n'a que peu augmenté par rapport au dispositif non-perfectionné. La température du four a en revanche fortement diminué, passant de 1230°C à 1150°C. La consommation d'oxygène a quant à elle diminué de 30%.

Connaissant la teneur en matières combustibles des déchets introduits et l'efficacité du four dans ce mode de fonctionnement donné, le pilotage du four peut être effectué en régulant la teneur en oxygène des fumées en sortie du four, laquelle peut être mesurée au niveau d'une zone d'évacuation des fumées. Dans l'exemple de réalisation ici présenté, la teneur en oxygène des fumées est régulée à 15% en volume.

## Revendications

1. Procédé de traitement de déchets en vue de former une matière minérale apte à être utilisée comme matière première vitrifiable dans un procédé de fusion du verre, lesdits déchets étant du type fibres de laine de verre ou de roche associées à des liants organiques et éventuellement de l'eau ou d'autres matières métalliques et/ou organiques, ledit procédé comprenant une étape de fusion d'une masse de déchets (9) par apport dans ladite masse de déchets (9) d'oxygène pur ou d'air enrichi en oxygène par le biais de moyens d'alimentation (8), ledit procédé étant tel que l'on apporte en outre de l'énergie par le biais d'au moins un brûleur immergé (11) sous ladite masse de déchets (9), ledit brûleur (11) étant un dispositif apportant au moins un comburant et au moins un combustible gazeux dans lequel, ou directement à l'issue duquel, ces réactifs sont mélangés de manière à créer une réaction exothermique de combustion, ledit procédé étant **caractérisé en ce que** lesdits moyens d'alimentation en oxygène pur ou en air enrichi en oxygène (8) sont disposés sur le support (3) de ladite masse de déchets (9), **en ce que** lesdits brûleurs (11) sont au nombre d'au moins trois et sont choisis en nombre impair, **en ce que** lesdits brûleurs (11) sont agencés dans une zone sensiblement à l'aplomb du sommet du talus de déchets fibreux (9), et **en ce que** lesdits brûleurs (11) sont répartis de manière symétrique par rapport à un axe vertical rencontrant le sommet du talus de matières fibreuses (9).

2. Procédé selon la revendication 1, **caractérisé en ce que** l'étape de fusion utilise un apport d'air enrichi en oxygène à hauteur d'au moins 40%.

3. Procédé selon l'une des revendications précédentes, **caractérisé en ce que** l'on fait déboucher les gaz de combustion d'au moins un brûleur immergé (11) directement dans la masse de déchets (9).

4. Dispositif pour la mise en oeuvre du procédé selon l'une quelconque des revendications 1 à 3 , comprenant une cuve constituée de matériaux réfractaires formant une sole (3), des parois (2) et une voûte (4), un support (3) du talus de déchets fibreux (9) constitué par la sole (3) dudit dispositif et sur lequel sont disposés des moyens d'alimentation en oxygène pur ou en air enrichi en oxygène (8), et au moins trois brûleurs immergés (11) disposés sur ladite sole (3), lesdits brûleurs étant des dispositifs apportant au moins un comburant et au moins un combustible gazeux dans lequel, ou directement à l'issue duquel, ces réactifs sont mélangés de manière à créer une réaction exothermique de combustion, lesdits brûleurs (11) étant agencés dans une zone sensiblement à l'aplomb du sommet du talus de déchets fibreux, lesdits brûleurs (11) étant répartis de manière symétrique par rapport à un axe vertical rencontrant le sommet du talus de matières fibreuses et étant choisis en nombre impair.

5. Dispositif selon la revendication 4, **caractérisé en ce que** le ou les brûleurs (11) sont composés d'un système de refroidissement du type boite à eau et d'un conduit central alimenté en gaz combustible autour duquel est ou sont disposé(s) concentriquement un ou plusieurs conduits alimentés en comburant (par exemple de l'oxygène), tous ces conduits de section cylindrique venant déboucher dans le nez du brûleur.

## Claims

1. A method for treating waste to obtain a mineral material useable as a vitreous raw material in a glass melting process, said waste being of the fiberglass or rock wool type combined with organic binders and optionally water or other metallic and/or organic materials, said process comprising a step for melting a waste mass (9) by the input, to said waste mass (9), of pure oxygen or oxygen-enriched air through feeding means (8), said process being such that energy is also added via at least one burner (11) submerged under the waste mass (9), said burner (11) being a device supplying at least one oxidizer and at least one fuel gas in which, or directly after which, these reagents are blended in order to create an exothermic combustion reaction, said process being **characterized in that** said means (8) for feeding pure oxygen or oxygen-enriched air are placed on the support (3) of said waste mass (9), **in that** said burners (11) are at least three in number and their total makes an odd number, **in that** said burners (11) are arranged in a zone substantially vertically below the top of the heap of fibrous waste (9), and **in that** said burners (11) are distributed symmetrically about a vertical axis passing through the top of the heap of fibrous materials (9).

2. The method as claimed in claim 1, **characterized in that** the melting step uses an input of oxygen-enriched air containing at least 40% oxygen.

3. The method as claimed in either of claims 1 and 2, **characterized in that** the combustion gases are discharged from at least one burner (11) directly submerged in the waste mass (9).

4. A device for implementing the method as claimed in any one of claims 1 to 3, comprising a vessel built of refractory materials forming a hearth (3), walls (2) and a roof (4), a support (3) of the heap of fibrous waste (9), consisting of the hearth (3) of said device and on which means for feeding pure oxygen or oxygen-enriched air (8) are placed, and at least three submerged burners (11) placed on the hearth (3), said burners being devices supplying at least one oxidizer and at least one fuel gas in which, or directly after which, these reagents are blended in order to create an exothermic combustion reaction, said burners (11) being arranged in a zone substantially vertically below the top of the heap of fibrous waste, said burners (11) being distributed symmetrically about a vertical axis passing through the top of the heap of fibrous materials and being selected to make an odd number.

5. The device as claimed in claim 4, **characterized in that** the burners (11) are composed of a cooling system of the water box type and a central line supplied with fuel gas around which one or more lines are placed concentrically, supplied with oxidizer (for example oxygen), all these cylindrical section lines terminating in the burner nozzle.

## Patentansprüche

1. Verfahren zur Behandlung von Abfällen, um ein mineralisches Material zu bilden, das als verglasbares Ausgangsmaterial in einem Glasschmelzprozess verwendbar ist, wobei die Abfälle von der Art von Glas- oder Steinwollefasern, die in Verbindung mit organischen Bindemitteln vorliegen, und gegebenenfalls Wasser oder andere, metallische und/oder organische Materialien sind, wobei das Verfahren einen Schritt des Schmelzens einer Abfallmasse (9) durch Einbringen von reinem Sauerstoff oder mit Sauerstoff angereicherter Luft in die Abfallmasse (9) mithilfe von Zuführeinrichtungen (8) umfasst, wobei das Verfahren derart ist, dass ferner Energie mithilfe mindestens eines unter der Abfallmasse (9) eingebetteten Brenners (11) eingebracht wird, wobei es sich bei dem Brenner (11) um eine Vorrichtung handelt, die mindestens einen eine Verbrennung bewirkenden Stoff bzw. einen Sauerstoffträger und mindestens ein gasförmiges Brennmaterial zuführt, wobei diese Reagenzien in dem Brenner oder unmittelbar beim Austritt aus diesem so vermischt werden, dass sie eine exothermische Verbrennungsreaktion hervorbringen, und das Verfahren **dadurch gekennzeichnet ist, dass** die Einrichtungen zum Zuführen von reinem Sauerstoff oder von mit Sauerstoff angereicherter Luft (8) auf dem Träger (3) der Abfallmasse (9) vorgesehen sind, dass die Brenner (11) mindestens drei an der Zahl sind und ihre Anzahl als ungerade Zahl gewählt wird, dass die Brenner (11) in einer Zone im Wesentlichen in der Lotlinie der Spitze der Schüttung der Faserabfälle (9) angeordnet sind, sowie dadurch, dass die Brenner (11) bezüglich einer durch die Spitze der Schüttung der Fasermaterialien (9) verlaufenden vertikalen Achse symmetrisch verteilt sind.

2. Verfahren nach Anspruch 1, **dadurch gekennzeichnet, dass** der Schmelzschritt ein Zuführen von Luft umfasst, die auf mindestens 40% mit Sauerstoff angereichert ist.

3. Verfahren nach einem der vorherigen Ansprüche, **dadurch gekennzeichnet, dass** die Verbrennungsgase mindestens eines eingebetteten Brenners (11) unmittelbar in die Abfallmasse (9) ausgeleitet werden.

4. Vorrichtung zur Durchführung des Verfahrens nach einem der Ansprüche 1 bis 3, **dadurch gekennzeichnet, dass** sie eine Kammer bestehend aus feuerfesten Materialien, die eine Sohle (3), Wände (2) und eine Decke (4) bilden, einen Träger (3) für die Schüttung von Faserabfällen (9), der aus der Sohle (3) der Vorrichtung besteht und auf dem Einrichtungen zum Zuführen von reinem Sauerstoff oder von mit Sauerstoff angereicherter Luft (8) vorgesehen sind, sowie mindestens drei auf der Sohle (3) vorgesehene eingebettete Brenner (11) aufweist, wobei es sich bei den Brennern (11) um Vorrichtungen handelt, welche mindestens einen eine Verbrennung bewirkenden Stoff bzw. einen Sauerstoffträger und mindestens ein gasförmiges Brennmaterial zuführen, wobei diese Reagenzien in den Brennern oder unmittelbar beim Austritt aus diesen so vermischt werden, dass sie eine exothermische Verbrennungsreaktion hervorbringen, wobei die Brenner (11) in einer Zone im Wesentlichen in der Lotlinie der Spitze der Schüttung von Faserabfällen angeordnet sind, die Brenner (11) bezüglich einer durch die Spitze der Schüttung von Fasermaterialien verlaufenden vertikalen Achse symmetrisch verteilt sind, und ihre Anzahl als eine ungerade Zahl gewählt ist.

5. Vorrichtung nach Anspruch 4, **dadurch gekennzeichnet, dass** der bzw. die Brenner (11) zusammengesetzt sind aus einem Kühlsystem vom Typ eines Wasserkastens sowie einer mit brennbarem Gas versorgten zentralen Leitung, um die herum eine oder mehrere Leitungen, welche mit einem eine Verbrennung bewirkenden Stoff bzw. einem Sauerstoffträger (beispielsweise Sauerstoff) versorgt wird/werden, konzentrisch angeordnet sind, wobei alle diese Leitungen einen zylindrischen Querschnitt aufweisen und in den Brennerkopf ausmünden.
